# EUROPEAN PATENT APPLICATION

(11) **EP 2 093 543 A2**
(43) Date of publication of application: **26.08.2009**
(21) Application number: 09153333.1
(22) Date of filing: 20.02.2009
(51) Int. Cl.: G01D 5/347

(54) **Photoelectric Encoder and Scale**

(30) Priority: 21.02.2008 JP 2008040360
(71) Applicant: Mitutoyo Corporation, Kawasaki-shi, Kanagawa 213-8533 (JP)
(72) Inventor: Kusano, Kouhei, Kawasaki-shi Kanagawa 213-8533 (JP)
(74) Representative: Skone James, Robert Edmund

(57) **Abstract**

According to an aspect of the present invention, there is provided a photoelectric encoder including: a scale; a light source irradiating a measurement light onto the scale; a light receiving unit receiving the measurement light reflected or transmitted by the scale; and a signal processing circuit processing a light receiving signal of the light receiving unit and detecting an absolute position of the scale, wherein the scale is configured to be relatively movable to the light source and the light receiving unit in a measuring direction, and includes a modulation incremental track that includes a modulation incremental pattern having a plurality of modulation scale patterns arranged thereon, and the modulation incremental pattern is formed so that a shape or a pitch of the modulation scale patterns changes periodically in the measuring direction within a first period.

## Description

### CROSS-REFERENCE TO RELATED APPLICATIONS

This application is based upon and claims the benefit of priority from the prior Japanese Patent Application No. 2008-40360, filed on February 21, 2008, the entire contents of which are incorporated herein by reference.

### BACKGROUND OF THE INVENTION

### Field of the Invention

The present invention relates to a photoelectric encoder and a scale.

### Description of the Related Art

There is known, as a device for measuring a moving distance of an object, an absolute encoder that can measure an absolute position as well as an incremental encoder measuring a relative moving distance.

If the incremental encoder is a photoelectric encoder, the incremental encoder includes an incremental track constituted by an equidistant light-dark incremental pattern. By counting light-dark signals based on this pattern, the incremental encoder detects a relative moving distance of an object. Furthermore, the incremental encoder includes an origin detection pattern provided separately from the equidistant light-dark incremental pattern and detects a relative moving distance of the object from an origin, thereby making it possible to detect an absolute moving distance of the object. A photoelectric origin detection method is disclosed in, for example, Japanese Patent Application Laid-Open No. 2005-83808. However, with the conventional photoelectric origin detection, it is necessary to provide the origin detection pattern and the incremental pattern side by side. Due to this, a pattern width is disadvantageously increased. Moreover, it is disadvantageously required to move a scale horizontally before measurement so as to read the origin detection pattern.

On the other hand, the absolute encoder includes an absolute track constituted by an absolute pattern that expresses pseudo random codes such as M-sequence codes. The absolute encoder detects an absolute position of an object by reading this pattern. Differently from the incremental encoder, the absolute encoder does not need to detect an origin using the origin detection pattern but can start measuring at a position at which the encoder is turned on. Nevertheless, the absolute encoder is inferior to the incremental encoder in detection accuracy.

In these circumstances, therefore, there is known a photoelectric encoder having an incremental track constituted by an equidistant incremental pattern and an absolute track constituted by an absolute pattern expressing pseudo random codes arranged on one scale side by side as disclosed in, for example, Japanese Patent Application Laid-Open No. 7-286861. The encoder detects, first, an absolute position of an object by reading the absolute pattern on the absolute track after the encoder is turned on, and interpolates the absolute position by a highly accurate relative position obtained by reading the incremental pattern on the incremental track. The technique can provide a photoelectric encoder capable of covering shortcomings of both the incremental encoder and the absolute encoder while enjoying merits of the both encoders.

However, the photoelectric encoder has the following problems. Since it is necessary to provide the absolute pattern and the incremental pattern side by side, a pattern width is increased. Furthermore, demand for a configuration that makes it possible to acquire more information from one track rises for a photoelectric encoder that tends to be made smaller in size.

It is an object of the present invention to provide a highly accurate photoelectric encoder and a scale capable of acquiring a plurality of types of information from one track.

### SUMMARY OF THE INVENTION

According to an aspect of the present invention, there is provided a photoelectric encoder including: a scale; a light source irradiating a measurement light onto the scale; a light receiving unit receiving the measurement light reflected or transmitted by the scale; and a signal processing circuit processing a light receiving signal of the light receiving unit and detecting an absolute position of the scale, the scale being configured to be relatively movable to the light source and the light receiving unit in a measuring direction, and includes a modulation incremental track that includes a modulation incremental pattern having a plurality of modulation scale patterns arranged thereon, and the modulation incremental pattern is formed so that a shape or a pitch of the modulation scale patterns changes periodically in the measuring direction within a first period.

According to another aspect of the present invention, there is provided a scale used in a photoelectric encoder and reflecting or transmitting a measurement light, including: a modulation incremental track including a modulation incremental pattern having a plurality of modulation scale patterns arranged thereon, the modulation incremental pattern being formed so that a shape or a pitch of the modulation scale patterns changes periodically in a measuring direction within a first period.

### BRIEF DESCRIPTION OF THE DRAWINGS

Fig. 1 is a schematic diagram showing an overall configuration of a photoelectric encoder according to a first embodiment of the present invention;
Fig. 2 is a plan view for explaining a configuration of a scale 12 shown in Fig. 1;
Fig. 3 is a plan view for explaining a configuration of a light receiving element 14 shown in Fig. 1;
Fig. 4A is a chart for explaining operation performed by the photoelectric encoder according to the first embodiment;
Fig. 4B is a chart for explaining operation performed by the photoelectric encoder according to the first embodiment;
Fig. 5 is a plan view for explaining a configuration of a scale 12a of a photoelectric encoder according to a second embodiment of the present invention;
Fig. 6 is a chart for explaining operation performed by the photoelectric encoder according to the second embodiment;
Fig. 7 is a plan view for explaining a configuration of a scale 12b of a photoelectric encoder according to a third embodiment of the present invention;
Fig. 8 is a schematic diagram showing an overall configuration of a photoelectric encoder according to a fourth embodiment of the present invention;
Fig. 9 is a plan view for explaining a configuration of a scale 12d shown in Fig. 8;
Fig. 10 is a plan view for explaining a configuration of a light receiving element 14a shown in Fig. 8;
Fig. 11 is a chart for explaining operation performed by the photoelectric encoder according to the fourth embodiment;
Fig. 12 is a plan view for explaining a configuration of a scale 12e of a photoelectric encoder according to a fifth embodiment of the present invention;
Fig. 13 is a plan view for explaining a configuration of a scale 12f of a photoelectric encoder according to a sixth embodiment of the present invention;
Fig. 14 is a schematic diagram showing an overall configuration of a photoelectric encoder according to a seventh embodiment of the present invention;
Fig. 15 is a plan view for explaining a configuration of a scale 12g shown in Fig. 14;
Fig. 16 is a plan view for explaining a configuration of a light receiving element 14b shown in Fig. 14;
Fig. 17 is a chart for explaining operation performed by a photoelectric encoder according to a seventh embodiment of the present invention;
Fig. 18 is a plan view for explaining a configuration of a scale 12h of a photoelectric encoder according to an eighth embodiment of the present invention;
Fig. 19 is a plan view for explaining a configuration of a scale 12i of a photoelectric encoder according to a ninth embodiment of the present invention;
Fig. 20 is a schematic diagram showing an overall configuration of a photoelectric encoder according to a tenth embodiment of the present invention;
Fig. 21 is a plan view for explaining a configuration of a scale 12i shown in Fig. 20;
Fig. 22 is a conceptual diagram for explaining a detailed configuration of an ABS/first modulation INC integrated scale 34 in the scale 12i shown in Fig. 21;
Figs. 23 is a schematic diagrams for explaining operation performed by a signal separation circuit 201 shown in Fig. 20;
Fig. 24 is a plan view for explaining a configuration of a scale 12j of a photoelectric encoder according to an eleventh embodiment of the present invention;
Fig. 25 is a plan view for explaining a configuration of a scale 12k of a photoelectric encoder according to a twelfth embodiment of the present invention;
Fig. 26 is a schematic diagram showing an overall configuration of a photoelectric encoder according to a thirteenth embodiment of the present invention;
Fig. 27 is a plan view for explaining a configuration of a light receiving element 14c shown in Fig. 26;
Fig. 28 is a plan view for explaining a configuration of a scale 121 shown in Fig. 26;
Fig. 29 is a plan view for explaining a configuration of a scale 12m of a photoelectric encoder according to a fourteenth embodiment of the present invention;
Fig. 30 is a plan view for explaining a configuration of a scale 12n of a photoelectric encoder according to a fifteenth embodiment of the present invention; and
Fig. 31 is a schematic diagram showing a modification of the embodiments of the present invention.

### DETAILED DESCRIPTION OF THE EMBODIMENTS

Embodiments of the present invention will be described hereinafter in detail with reference to the accompanying drawings.

### [First Embodiment]

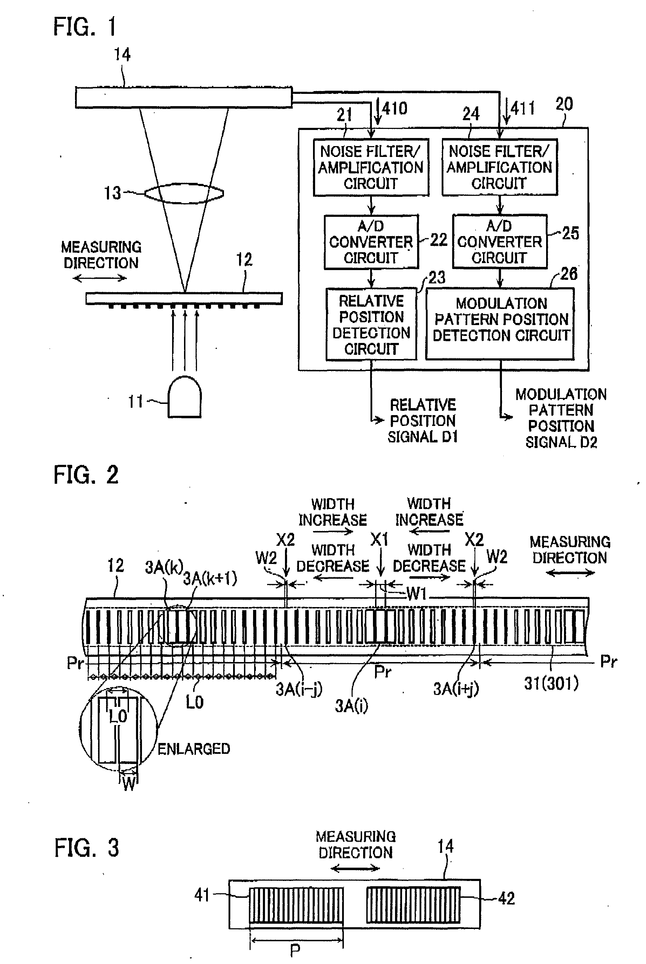

Fig. 1 is a schematic diagram showing an overall configuration of a photoelectric encoder according to a first embodiment of the present invention. The photoelectric encoder according to the first embodiment is configured to include a light emitting element 11, a scale 12, a lens 13, a light receiving element 14 and a signal processing circuit 20.

The light emitting element 11 is, for example, an LED.

The scale 12 is configured to be movable in a measuring distance relatively to the light emitting element 11 and the light receiving element 14. As shown in Fig. 2, the scale 12 includes a first modulation incremental track 301 that includes a first modulation incremental pattern 31 formed by arranging a plurality of first modulation scale patterns 3A(k) (k=1 to n) in a measuring direction on a transparent glass substrate.

The first modulation incremental pattern 31 is formed so that a center distance L0 in a measuring direction between one first modulation scale pattern 3A (k) and a first modulation scale pattern 3A(k+1) adjacent to the pattern 3A (k) in the measuring direction is equal among all the first modulation scale patterns 3A(k). In this respect, each first modulation scale pattern 3A(k) is similar in configuration to an ordinary incremental pattern. Further, the first modulation incremental pattern 31 is formed so that a width W of each first modulation scale pattern 3A(k) in the measuring direction has a periodic change within a predetermined period Pr (such as about 0.2 mm to 0.6 mm). Namely, a modulation scale pattern 3A(i) formed at a central position X1 within the predetermined period Pr has a maximum width W1 in the measuring direction within the predetermined period Pr. Furthermore, each of modulation scale patterns 3A(i+j) and 3A(i-j) formed at end positions X2, respectively within the predetermined period Pr has a minimum width W2 in the measuring direction within the predetermined period Pr. Widths W of the modulation scale patterns 3A (k) in the measuring direction are set to be smaller from the central position X1 toward each end position X2 within the predetermined period Pr. By so setting, a signal intensity has a periodic change within the predetermined period Pr.

The light emitting element 11 irradiates a light onto this scale 12 and an irradiated light transmitted by the scale 12 is projected onto the light receiving element 14 via the lens 13.

As shown in Fig. 3, the light receiving element 14 is configured to include a photodiode array for incremental signal detection (hereinafter, "INC array") 41 and a photodiode array for modulation signal detection (hereinafter, "modulation array") 42.

The INC array 41 is formed so that a length of the INC array 41 in the measuring direction is a length P that is an integer multiple of the predetermined period Pr. Namely, the INC array 41 is configured to obtain light-dark signals from each of which a modulation component is removed by setting the length of the INC array 41 in the measuring direction to the length P. The INC array 41 includes four photodiode arrays different in phase each by 90 degrees. Because of the presence of the four photodiode arrays, the INC array 41 can detect a light-dark signal based on the first modulation incremental pattern 31 and output four-phase sinusoidal signals different in phase each by 90 degrees.

The modulation array 42 is configured to arrange photodiodes each having a magnitude equal to or smaller than half the predetermined period (modulation period) Pr. The modulation array 42 outputs a light-dark signal by sweeping the respective photodiodes based on the first modulation incremental pattern 31.

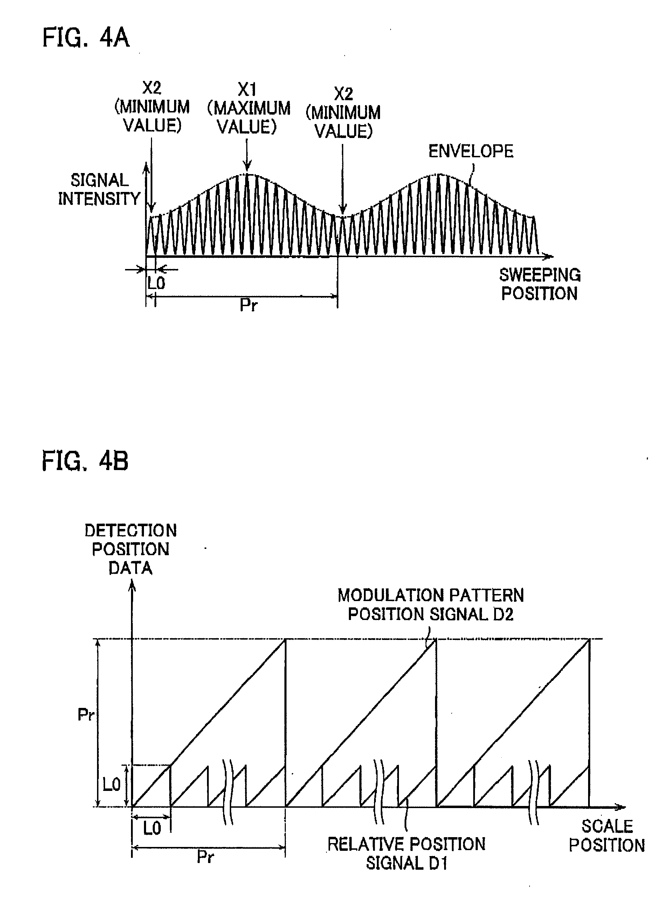

Fig. 4A is a chart showing a light-dark signal 411 output from the modulation array 42. As shown in Fig. 4A, an intensity of the light-dark signal 411 changes in a sinusoidal wave fashion in accordance with a scale position and the center distance L0. Further, an envelope (see Fig. 4A) connecting maximum amplitudes of a sinusoidal wave changes in a sinusoidal wave fashion so as to have a maximum value and a minimum value within the predetermined period Pr. That is, the maximum value of the envelope occurs at the central position X1 and the minimum value thereof occurs at each of the end positions X2.

Referring back to Fig. 1, the signal processing circuit 20 is configured to include, for example, a noise filter/amplification circuit 21, an A/D converter circuit 22, a relative position detection circuit 23, a noise filter/amplification circuit 24, an A/D converter circuit 25 and a modulation pattern position detection circuit 26.

The noise filter/amplification circuit 21 differentially amplifies an analog output signal (each of four-phase sinusoidal signals different in phase each by 90 degrees) 410 from the INC array 41, removes noise from the differentially-amplified analog output signal and outputs the resultant analog output signal. The A/D converter circuit 22 converts the analog output signal output from the noise filter/amplification circuit 21 into a digital signal. The relative position detection circuit 23 performs an arctan operation on an amplitude of the obtained digital signal (90-degree phase difference signal), thereby outputting a relative position signal D1 indicating a relative moving amount and a relative moving direction of the scale 10.

The noise filter/amplification circuit 24 removes noise from the analog signal 411 from the modulation array 42 of the light receiving element 14, amplifies the noise-removed analog signal and outputs the amplified analog signal. The A/D converter circuit 25 converts the analog signal output from the noise filter/amplification circuit 24 into a digital signal. The modulation pattern position detection circuit 26 detects an envelope of the digitized light-dark signal from the A/D converter circuit 25, thereby calculating a modulation pattern position and outputting a modulation pattern position signal D2.

Fig. 4B is a chart showing the relative position signal D1 and the modulation pattern position signal D2 output from the relative position detection circuit 23 and the modulation pattern position detection circuit 26, respectively. As shown in Fig. 4B, the relative position detection signal D1 with the center distance L0 set as a period thereof and the modulation pattern position signal D2 with the predetermined period Pr set as a period thereof are obtained to correspond to movement of the scale 12.

As can be understood, the photoelectric encoder according to the first embodiment can detect in which period the scale 12 is located seen from a measuring start position, with the center distance L0 assumed as one period, by counting changes in the relative position signal D1. Furthermore, the photoelectric encoder can detect in which period the scale 12 is located seen from a measuring start position, with the predetermined period Pr assumed as one period, by counting changes in the modulation pattern position signal D2.

Namely, the photoelectric encoder according to the first embodiment can acquire information other than a relative position using one track.

Moreover, by configuring a modulation part of the first modulation incremental pattern 31 to correspond only to one modulation period Pr and remaining parts thereof to correspond to the ordinary incremental pattern, the modulation pattern position signal D2 can be assumed as an origin signal. Besides, in that case, an origin position can be arbitrarily set within the modulation period Pr.

### [Second Embodiment]

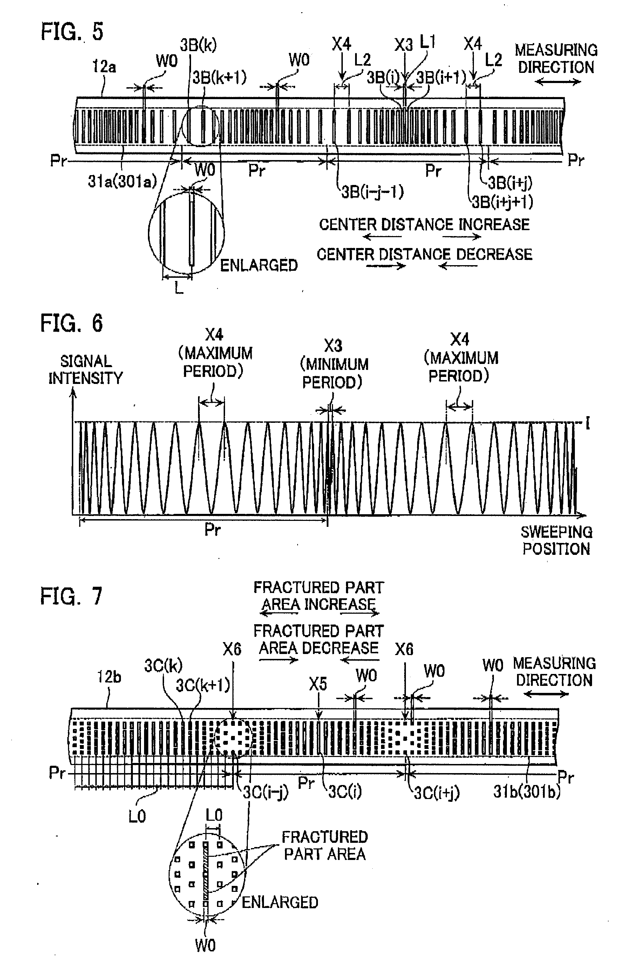

A photoelectric encoder according to a second embodiment of the present invention will be described with reference to Fig. 5. Fig. 5 is a plan view for explaining a configuration of a scale 12a of the photoelectric encoder according to the second embodiment. The photoelectric encoder according to the second embodiment differs from that according to the first embodiment only in the configuration of the scale 12a, and is similar to that according to the first embodiment in remaining configurations. In the second embodiment, Similar constituent elements of the photoelectric encoder according to the first embodiment are not described.

As shown in Fig. 5, the scale 12a includes a second modulation incremental track 301a that includes a second modulation incremental pattern 31a formed by arranging a plurality of second modulation scale patterns 3B(k) (k=1 to n) in a predetermined period (such as about 0.2 mm to 0.6 mm) in the measuring direction on a transparent glass substrate.

The second modulation incremental pattern 31a is formed so that a center distance L between one second modulation scale pattern 3B (k) and the second modulation scale pattern 3B(k+1) adjacent to the pattern 3B(k) changes periodically within a predetermined period Pr. Further, the second modulation incremental pattern 31a is formed so that a width W0 of each second modulation scale pattern 3B (k) in the measuring direction is equal. Namely, the center distance L between second modulation scale patterns 3B (i) and 3B (i+1) formed on both sides of a central position X3, respectively within the predetermined period Pr is a shortest distance L1 within the predetermined period Pr. Moreover, a center distance between second modulation scale patterns 3B(i-j) and 3B(i-j-1) (or a center distance between second modulation patterns 3B(i+j) and 3B(i+j+1)) formed on both sides of an end position X4, respectively within the predetermined period Pr is a longest distance L2 within the predetermined period Pr. Center distances each between the two second modulation scale patterns 3B(k) are set to be longer from the central position X3 toward each end position X4.

Fig. 6 is a chart showing a light-dark signal 411 based on the scale 12a and output from the modulation array 42. As shown in Fig. 6, an intensity of the light-dark signal 411 changes in a sinusoidal wave fashion to correspond to a scale position and the center distance L. A period in which the intensity of the light-dark signal 411 changes in a sinusoidal wave fashion changes at intervals of the predetermined period Pr. The period is the longest in an interval near the central position X4 and the shortest in an interval near each end position X3. It is to be noted that a signal similar to the modulation pattern position signal D2 shown in Fig. 4B is obtained by processing the light-dark signal 411 by means of a modulation pattern detection circuit 26.

The photoelectric encoder according to the second embodiment stated above can exhibit similar advantages to those of the photoelectric encoder according to the first embodiment.

### [Third Embodiment]

Referring to Fig. 7, a photoelectric encoder according to a third embodiment of the present invention will be described. Fig. 7 is a plan view for explaining a configuration of a scale 12b of the photoelectric encoder according to the third embodiment. The photoelectric encoder according to the third embodiment differs from that according to the first embodiment only in the configuration of the scale 12b, and is similar to that according to the first embodiment in remaining configurations. Similar constituent elements of the photoelectric encoder according to the first embodiment are not described in the third embodiment.

As shown in Fig. 7, the scale 12b includes a thirdmodulation incremental track 301b that includes a third modulation incremental pattern 31b formed by arranging a plurality of third modulation scale patterns 3C(k) (k=1 to n) in a predetermined period (such as about 0.2 mm to 0.6 mm) in a measuring direction on a transparent glass substrate.

The third modulation incremental pattern 31b is formed so that a center distance L0 between one third modulation scale pattern 3C(k) and a third modulation scale pattern 3C(k+1) adjacent to the pattern 3C(k) is equal among all the third modulation scale patterns 3C(k). The third modulation scale pattern 3C (k) is formed so that a width W0 of each third modulation scale pattern 3C(k) in the measuring direction is equal. Further, the third modulation incremental pattern 31b is formed so that a fracture part area of the third modulation scale pattern 3C (k) changes periodically within a predetermined period Pr. The fracture part area means herein an area of a part in which the third modulation scale pattern 3C (k) is fractured. Namely, a third modulation scale pattern 3C(i) at a central position X5 within the predetermined period Pr does not have a fracture shape but a linear shape. On the other hand, each of third modulation scale patterns 3C(i+j) and 3C(i-j) at end positions X6, respectively within the predetermined period Pr has a shape (fracture shape) having a largest fracture part area within the predetermined period Pr. Third modulation scale patterns 3C (k) are formed so that the fracture part area is larger from the central position X5 toward each end position X6.

It is to be noted that a light-dark signal 411 based on the scale 12b and output from the modulation array 42 is similar in waveform to the signal shown in Fig. 4A according to the first embodiment.

The photoelectric encoder according to the third embodiment stated above can exhibit similar advantages to those of the photoelectric encoder according to the first embodiment.

### [Fourth Embodiment]

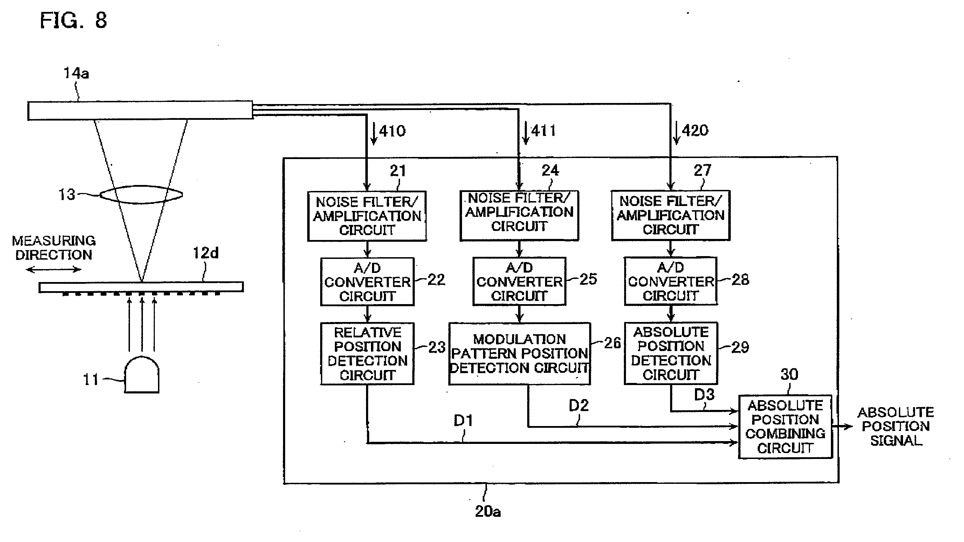

Referring to Figs. 8 to 11, a photoelectric encoder according to a fourth embodiment of the present invention will be described. Fig. 8 is a schematic diagram showing an overall configuration of the photoelectric encoder according to the fourth embodiment. The photoelectric encoder according to the fourth embodiment differs from those according to the first to third embodiments in configurations of a scale 12d, a light receiving element 14a and a signal processing circuit 20a. Similar constituent elements of the photoelectric encoder according to the first embodiment are not described in the fourth embodiment.

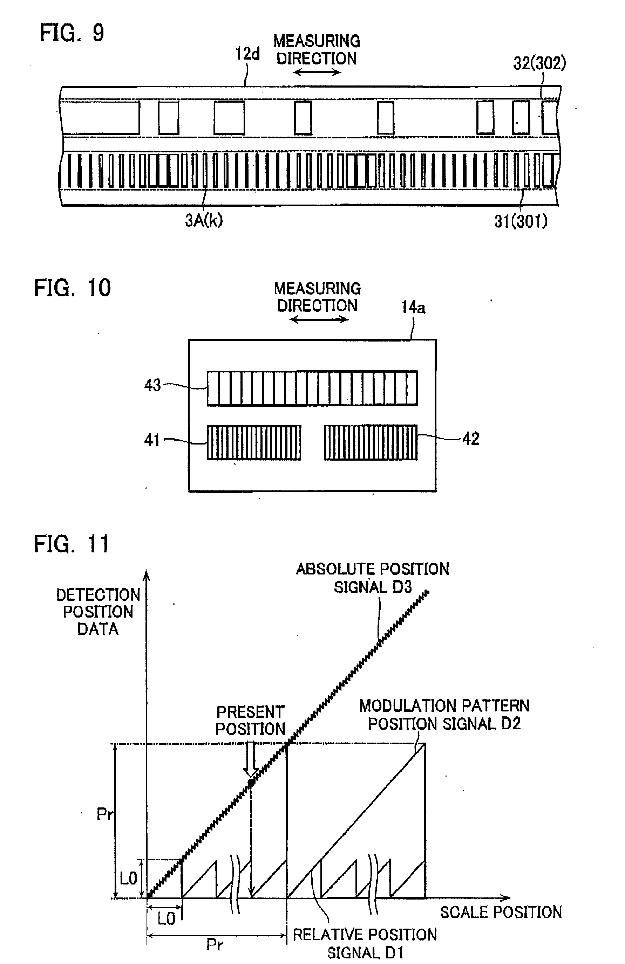

Referring first to Fig. 9, the configuration of the scale 12d of the photoelectric encoder according to the fourth embodiment will be described. Fig. 9 is a plan view for explaining the configuration of the scale 12d. As shown in Fig. 9, the scale 12d includes a first modulation incremental track 301 similarly to the first embodiment. The scale 12d also includes an absolute track 302 constituted by an ordinary absolute pattern 32 that expresses an absolute position by a pseudo random pattern (M-sequence code in this embodiment).

Referring next to Fig. 10, the light receiving element 14a of the photoelectric encoder according to the fourth embodiment will be described. Fig. 10 is a plan view for explaining the configuration of the light receiving element 14a.

As shown in Fig. 10, the light receiving element 14a includes an INC array 41 and a modulation array 42 similarly to the first embodiment. The light receiving element 14a also includes an ABS detection photodiode array (hereinafter, "ABS array") 43 corresponding to the absolute track 302.

The ABS array 43 is configured to arrange photodiodes at an arrangement pitch corresponding to a minimum line width of the absolute pattern 32. The ABS array 43 outputs a signal obtained by sweeping light-dark signals based on the absolute pattern 32 in a measuring direction.

Referring back to Fig. 8, the signal processing circuit 20a of the photoelectric encoder according to the fourth embodiment will be described.

As shown in Fig. 8, the signal processing circuit 20a includes noise filter/amplification circuits 21 and 24, A/D converter circuits 22 and 25, a relative position detection circuit 23 and a modulation pattern position detection circuit 26 similarly to the first embodiment. The signal processing circuit 20a also includes a noise filter/amplification circuit 27, an A/D converter circuit 28, an absolute position detection circuit 29 and an absolute position combining circuit 30.

The noise filter/amplification circuit 27 removes noise from an analog output signal (absolute position signal) 420 from the ABS array 43, amplifies the analog output signal 420 and outputs the amplified analog output signal. The A/D converter circuit 28 converts the analog signal output from the noise filter/amplification circuit 27 into a digital signal. The converted digital signal includes M-sequence code data expressed on the absolute pattern 32 in this case.

The absolute position detection circuit 29 includes a table (not shown) that shows a relationship between a M-sequence code and an absolute position expressed by the M-sequence code. The absolute position detection circuit 29 outputs an absolute position signal D3 indicating an absolute position of the scale 12d while referring to this table.

The absolute position combining circuit 30 calculates a fine absolute position of the scale 12d based on a relative position signal D1, a modulation pattern position signal D2 and the absolute position signal D3. This operation performed by the absolute position combining circuit 30 will be described with reference to Fig. 11. Fig. 11 is a chart for explaining operation performed by the photoelectric encoder according to the fourth embodiment.

As shown in Fig. 11, the absolute position signal D3 includes information on the absolute position of the scale 12d. Namely, absolute position information can be acquired from the absolute position signal D3. Further, a rough position can be identified based on the absolute position signal D3 and finer position information can be acquired using the modulation pattern position signal D2 and the relative position signal D1 as well as the absolute position signal D3.

The photoelectric encoder according to the fourth embodiment stated above can exhibit similar advantages to those of the photoelectric encoder according to the first embodiment.

Moreover, in case of the photoelectric encoder according to the fourth embodiment, the absolute pattern 32 is not required to have position accuracy corresponding to the center distance L0 in the modulation incremental pattern 31 that is formed finely but it suffices to form the absolute pattern 32 with a predetermined position accuracy with respect to a predetermined period Pr larger than the center distance L0. Therefore, according to the fourth embodiment, it is possible to make a pitch of the modulation incremental pattern 31 smaller and to thereby improve accuracy of the photoelectric encoder.

Furthermore, since a position error allowance for the absolute pattern 32 can be set large, scale manufacturing cost may possibly be reduced.

### [Fifth Embodiment]

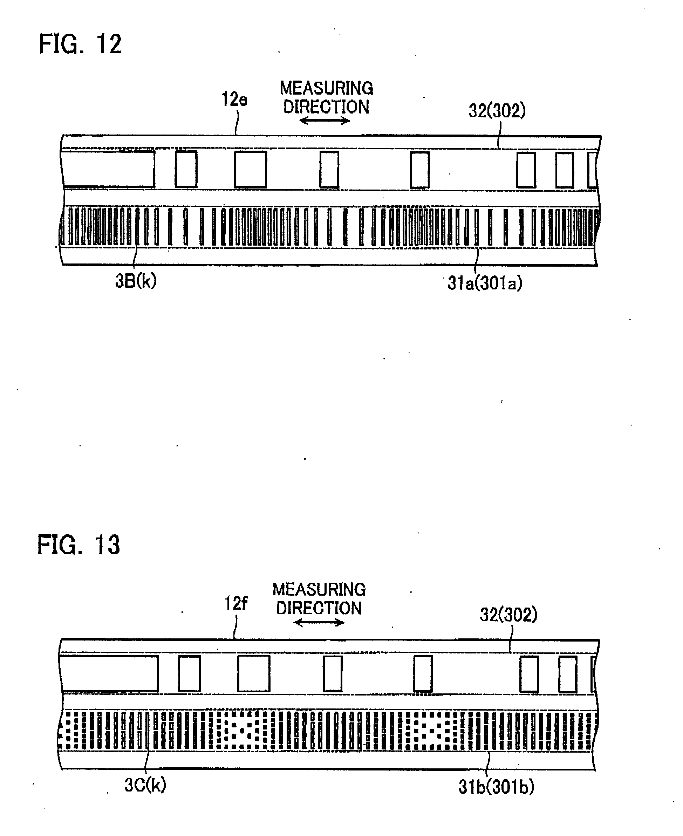

Referring to Fig. 12, a photoelectric encoder according to a fifth embodiment of the present invention will be described. Fig. 12 is a plan view showing a configuration of a scale 12e of the photoelectric encoder according to the fifth embodiment. The photoelectric encoder according to the fifth embodiment differs from that according to the fourth embodiment only in the configuration of the scale 12e. Similar constituent elements of the photoelectric encoder according to the first to fourth embodiment are not described in the fifth embodiment.

As shown in Fig. 12, the scale 12e includes a second modulation incremental track 301a similarly to the second embodiment. The scale 12e also includes an absolute track 302 similarly to the fourth embodiment.

The photoelectric encoder according to the fifth embodiment stated above can exhibit similar advantages to those of the photoelectric encoder according to the fourth embodiment.

### [Sixth Embodiment]

Referring to Fig. 13, a photoelectric encoder according to a sixth embodiment of the present invention will be described. Fig. 13 is a plan view showing a configuration of a scale 12f of the photoelectric encoder according to the sixth embodiment. The photoelectric encoder according to the sixth embodiment differs from that according to the fourth embodiment only in the configuration of the scale 12f. Similar constituent elements of the photoelectric encoder according to the first to fourth embodiment are not described in the sixth embodiment.

As shown in Fig. 13, the scale 12f includes a third modulation incremental track 301b similarly to the third embodiment. The scale 12f also includes an absolute track 302 similarly to the fourth embodiment.

The photoelectric encoder according to the sixth embodiment stated above can exhibit similar advantages to those of the photoelectric encoder according to the fourth embodiment.

### [Seventh Embodiment]

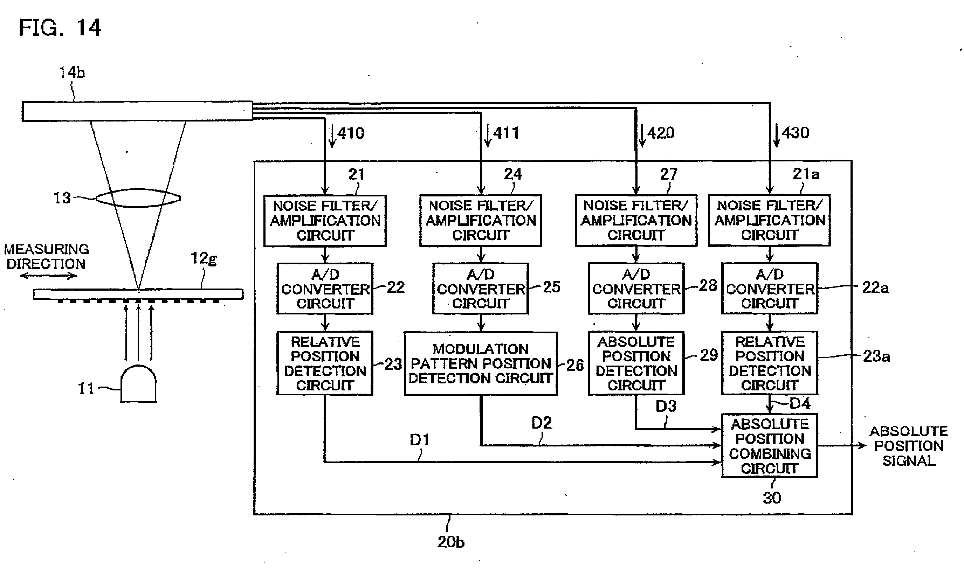

Referring to Figs. 14 to 17, a photoelectric encoder according to a seventh embodiment of the present invention will be described. Fig. 14 is a schematic diagram showing an overall configuration of the photoelectric encoder according to the seventh embodiment. The photoelectric encoder according to the seventh embodiment differs from those according to the first to sixth embodiments in configurations of a scale 12g, a light receiving element 14b and a signal processing circuit 20b. Similar constituent elements of the photoelectric encoder according to the first to sixth embodiments are denoted by the same reference symbols and not described in the seventh embodiment.

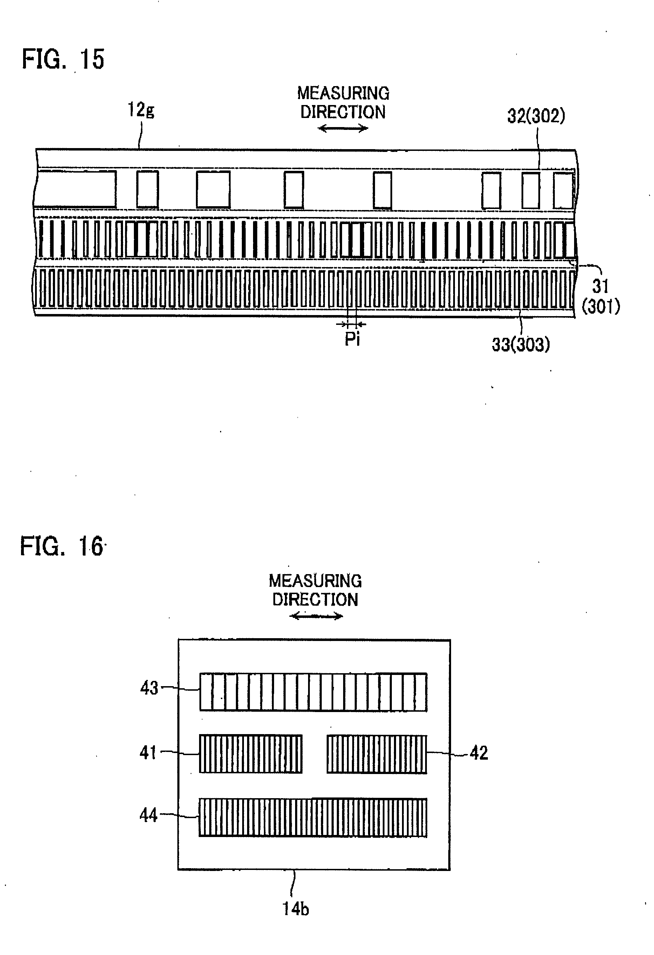

Referring first to Fig. 15, the configuration of the scale 12g of the photoelectric encoder according to the seventh embodiment will be described. Fig. 15 is a plan view for explaining the configuration of the scale 12g. As shown in Fig. 15, the scale 12g includes a first modulation incremental track 301 and an absolute track 302 constituted by an absolute pattern 32 similarly to the fourth embodiment. The scale 12g also includes an.incremental track 303 constituted by an incremental pattern 33 formed at an equidistant light-dark arrangement pitch Pi (such as 40 micrometers (µm)).

Referring next to Fig. 16, the light receiving element 14b of the photoelectric encoder according to the seventh embodiment will be described. Fig. 16 is a plan view for explaining the configuration of the light receiving element 14b.

As shown in Fig. 16, the light receiving element 14b includes an INC array 41 and a modulation array 42 similarly to the fourth embodiment. The light receiving element 14b also includes an INC detection photodiode array (hereinafter, "INC array") 44 to correspond to the incremental track 303.

The INC array 44 is configured to arrange photodiodes at an arrangement pitch to correspond to a pitch of the incremental pattern 33. Similarly to the INC array 41, the INC array 44 includes four photodiode arrays different in phase each by 90 degrees, detects light-dark signals based on the incremental pattern 31 and outputs four-phase sinusoidal wave signals different in phase each by 90 degrees.

Referring back to Fig. 14, the signal processing circuit 20b of the photoelectric encoder according to the fourth embodiment will be described.

As shown in Fig. 14, the signal processing circuit 20b includes noise filter/amplification circuits 21, 24 and 27, A/D converter circuits 22, 25 and 28, a relative position detection circuit 23, a modulation pattern position detection circuit 26, an absolute position detection circuit 29 and an absolute position combining circuit 30 similarlyto the fourth embodiment. The signal processing circuit 20b also includes a noise filter/amplification circuit 21a, an A/D converter circuit 22a and an absolute position detection circuit 23a.

The noise filter/amplification circuit 21a differentially amplifies an analog output signal (each of four-phase sinusoidal signals different in phase each by 90 degrees) 430 from the INC array 44, removes noise from the differentially-amplified analog output signal and outputs the resultant analog output signal. The A/D converter circuit 22a converts the analog output signal output from the noise filter/amplification circuit 21a into a digital signal. The absolute position detection circuit 23a performs an arctan operation on an amplitude of the obtained digital signal (90-degree phase difference signal), thereby outputting a relative position signal D4 indicating a relative moving amount and a relative moving direction of the scale 12g.

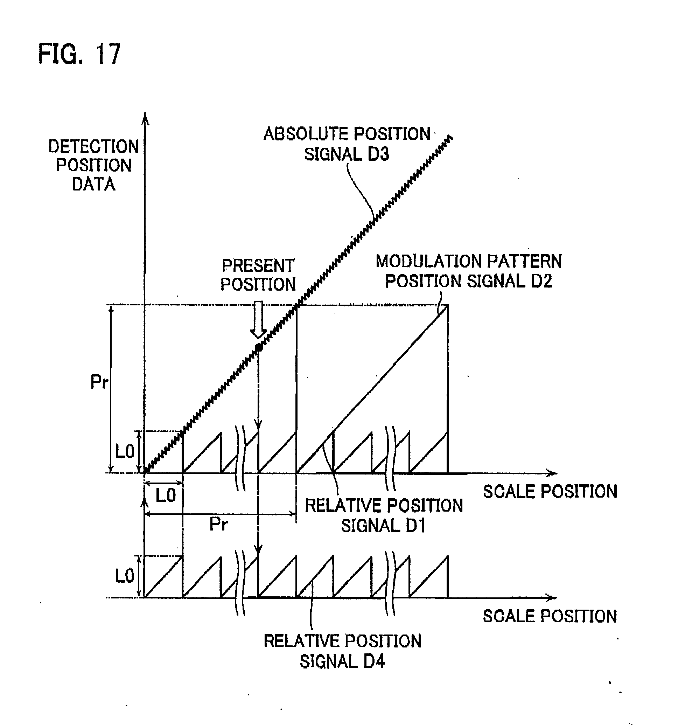

The absolute position combining circuit 30 calculates a fine absolute position of the scale 12g based on a relative position signal D1, a modulation pattern position signal D2, an absolute position signal D3 and the relative position signal D4. This operation performed by the absolute position combining circuit 30 will be described with reference to Fig. 17. Fig. 17 is a chart for explaining operation performed by the photoelectric encoder according to the seventh embodiment.

As shown in Fig. 17, the absolute position signal D3 includes information on an absolute position of the scale 12g. Since the absolute pattern 32 is formed with a predetermined accuracy,' absolute position information can be acquired from the absolute position signal D3. Further, a rough position can be identified based on the absolute position signal D3 and finer position information can be acquired using themodulationpattern position signal D2 and the relative position signals D1 and D4 as well as the absolute position signal D3.

The photoelectric encoder according to the seventh embodiment stated above can exhibit similar advantages to those of the photoelectric encoder according to the fourth embodiment.

Moreover even if one of the relative position signals D1 and D4 is difficult to read, the position of the scale 12g can be identified by the other relative position signal.

Furthermore, by averaging the relative position signals D1 and D4, it is possible to eliminate error generated by misalignment during attachment of the photoelectric encoder.

### [Eighth Embodiment]

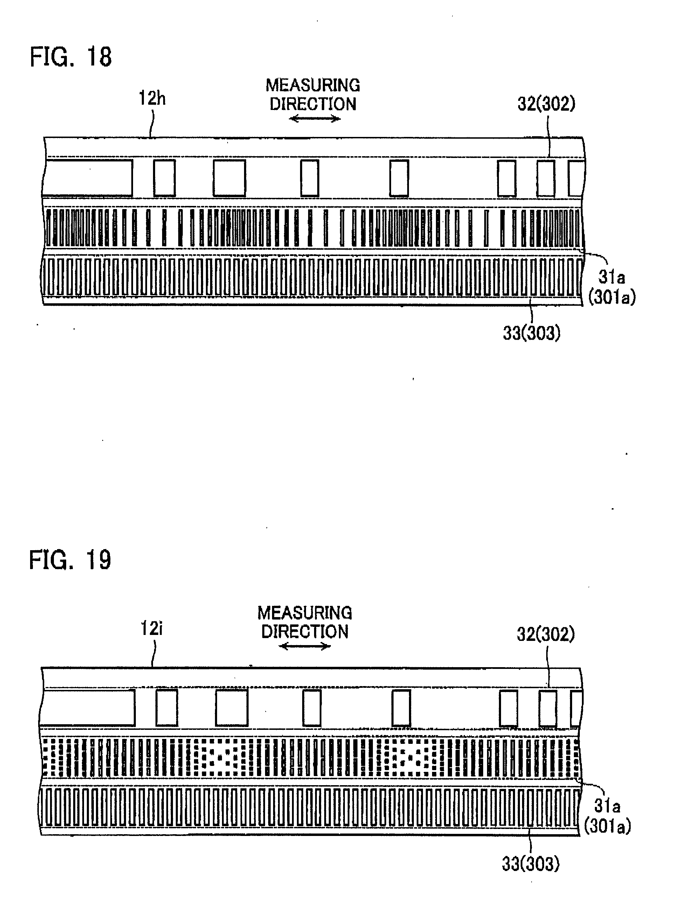

Referring to Fig. 18, a photoelectric encoder according to an eighth embodiment of the present invention will be described.

Fig. 18 is a plan view showing a configuration of a scale 12h of the photoelectric encoder according to the eighth embodiment. The photoelectric encoder according to the eighth embodiment differs from that according to the seventh embodiment only in the configuration of the scale 12h. Similar constituent elements of the photoelectric encoder according to the first to seventh embodiments are not described in the eighth embodiment.

As shown in Fig. 18, the scale 12h includes a second modulation incremental track 301a and an absolute track 302 similarly to the fifth embodiment. The scale 12h also includes an incremental track 303 similarly to the seventh embodiment.

The photoelectric encoder according to the eighth embodiment stated above can exhibit similar advantages to those of the photoelectric encoder according to the seventh embodiment.

### [Ninth Embodiment]

Referring to Fig. 19, a photoelectric encoder according to a ninth embodiment of the present invention will be described. Fig. 19 is a plan view showing a configuration of a scale 12i of the photoelectric encoder according to the ninth embodiment. The photoelectric encoder according to the ninth embodiment differs from that according to the seventh embodiment only in the configuration of the scale 12i. Similar constituent elements of the photoelectric encoder according to the first to eighth embodiments are not described in the ninth embodiment.

As shown in Fig. 19, the scale 12i includes a third modulation incremental track 301b and an absolute track 302 similarly to the sixth embodiment. The scale 12i also includes an incremental track 303 similarly to the seventh embodiment.

The photoelectric encoder according to the ninth embodiment stated above can exhibit similar advantages to those of the photoelectric encoder according to the seventh embodiment.

### [Tenth Embodiment]

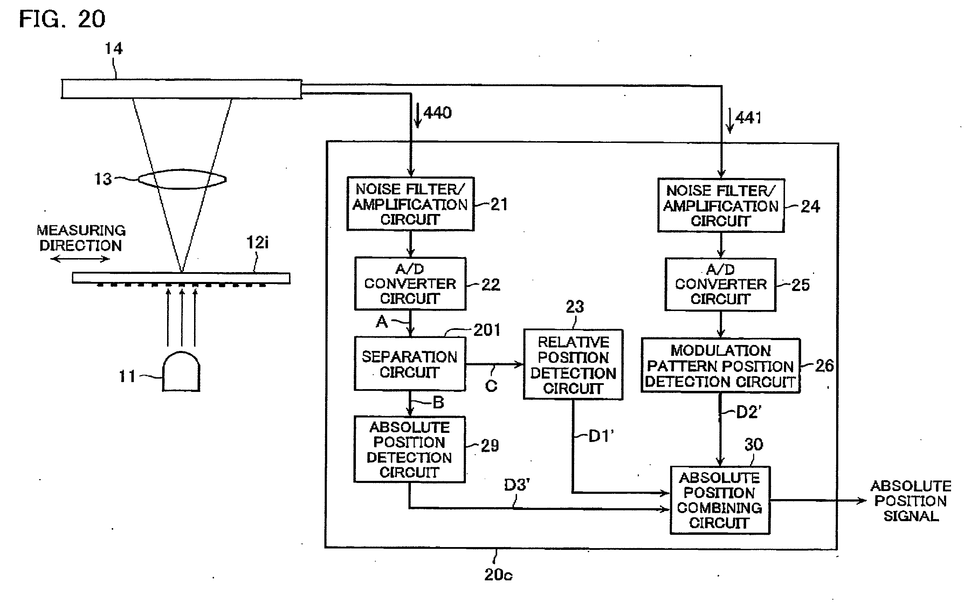

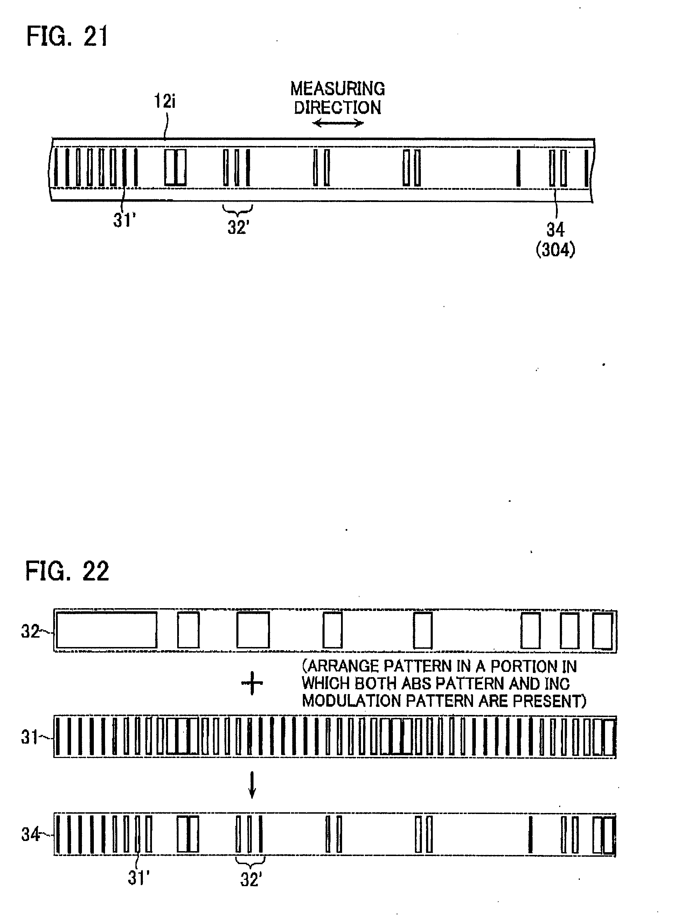

Referring to Figs. 20 and 21, a photoelectric encoder according to a tenth embodiment of the present invention will be described. Similar constituent elements of the photoelectric encoder according to the first to ninth embodiments are denoted by the same reference symbols and are not described in the tenth embodiment.

Fig. 20 is a schematic diagram showing an overall configuration of the photoelectric encoder according to the tenth embodiment. Fig. 21 shows a plane configuration of a scale 12i. As shown in Fig. 21, the tenth embodiment differs from the first to ninth embodiment in that the scale 12i includes an ABS/first modulation INC integrated track 304 constituted by an ABS/first modulation INC integrated pattern 34 that is obtained by integrating a first modulation incremental pattern 31 with an absolute pattern 32 and arranging the integrated pattern on one track in place of the first modulation incremental pattern 31 and the absolute pattern 32.

As shown in Fig. 22, the ABS/first modulation INC integrated pattern 34 is formed by integrating the absolute pattern 32 with the first modulation incremental pattern 31 and arranging the integrated pattern on one track. Specifically, the ABS/first modulation INC integrated pattern 34 is configured to form patterns only in portions in which both the absolute pattern 32 and the first modulation incremental pattern 31 are present and to include an absolute pattern part 32' corresponding to the absolute pattern 32 and a first modulation incremental pattern part 31' corresponding to the first modulation incremental pattern 31.

In the tenth embodiment, the scale 12i includes only one track as stated above. Therefore, an occupation area can be reduced as compared with the fourth embodiment in which the scale 12d includes two tracks.

A light receiving element 14 is configured similarly to that according to the first embodiment (Fig. 3) so as to correspond to the configuration of the scale 12i as stated above.

As shown in Fig. 20, a signal processing circuit 20c according to the tenth embodiment differs from the signal processing circuit 20 according to the first embodiment in that an analog signal 440 from an INC array 41 of a light receiving element 14 based on the ABS/first modulation INC integrated pattern 34 is input to a separation circuit 201 via a noise filter/amplification circuit 21 and an A/D converter circuit 22.

On the other hand, an analog signal 441 from a modulation array 42 based on the ABS/first modulation INC integrated pattern 34 is input to a modulation pattern position detection circuit 26 via a noise filter/amplification circuit 24 and an A/D converter circuit 25. The modulation pattern position detection circuit 2 6 outputs amodulation pattern position signal D2' to an absolute position combining circuit 30.

The separation circuit 201 functions to separate a signal based on the absolute pattern part 32' and a signal based on modulation incremental pattern part 31' from the ABS/first modulation INC integrated pattern 34. Specifically, the separation circuit 201 includes a lowpass filter, a subtraction circuit and the like that are not shown. For example, the lowpass filter removes a signal based on the modulation incremental pattern part 31' from a light-dark signal based on the ABS/first modulation INC integrated pattern 34, thereby obtaining an absolute light-dark signal. Next, the subtraction circuit subtracts the obtained absolute light-dark signal from the light-dark signal based on the ABS/first modulation INC integrated pattern 34, thereby making it possible to obtain a modulation incremental light-dark signal.

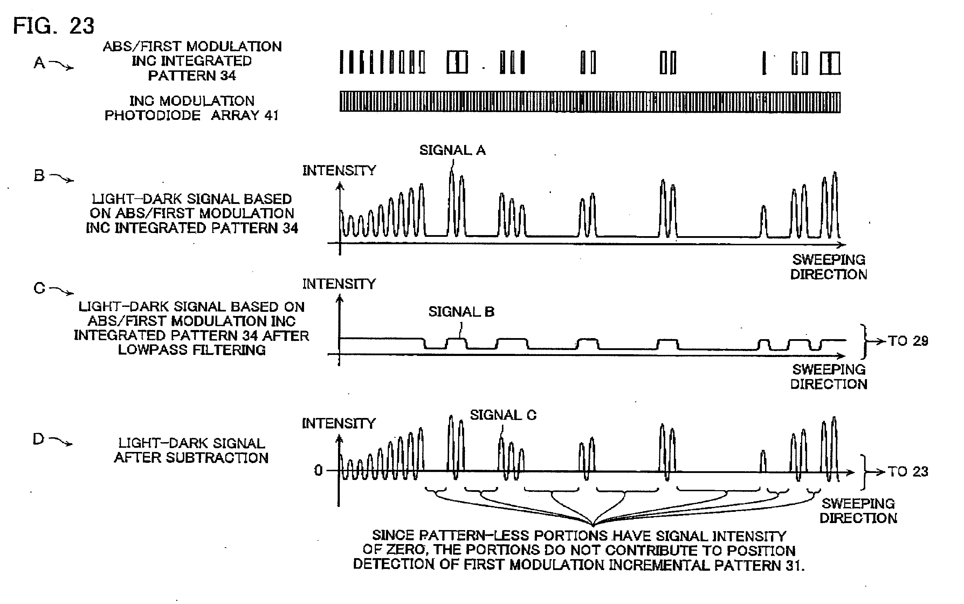

Referring now to Fig. 23, a method of processing a signal based on the ABS/first modulation INC integrated pattern 34 will be described in detail. In Fig. 23, symbol "A" denotes the relationship between the INC array 41 and the ABS/first modulation INC integrated pattern 34. In Fig. 23, symbol "B" denotes the light-dark signal 440 based on the ABS/first modulation INC integrated pattern 34 and obtained from the INC array 41 by sweeping in the measuring axial direction. In symbol "B", a vertical axis indicates signal intensity and a horizontal axis indicates sweeping direction. As obvious from symbol "B", a signal A includes a mixture of an absolute light-dark signal and an incremental light-dark signal. In Fig. 23, symbol "C" denotes a light-dark signal after lowpass filtering. The lowpass filtering removes the incremental light-dark signal and only an absolute light-dark signal B remains. As a result, the absolute light-dark signal B can be separated. This absolute light-dark signal B is transmitted to the absolute position signal detection circuit 29. The absolute position signal detection circuit 29 outputs an absolute position signal D3' based on the signal B.

In Fig. 23, symbol "D" denotes a signal C obtained by subtracting the absolute light-dark signal B shown in symbol "C" from the light-dark signal Abased on the ABS/first modulation INC integrated pattern 34 shown in symbol "B". In this signal C, a portions in which the absolute pattern part 32' is not present have a signal intensity of zero and do not, therefore, contribute to incremental position detection. Therefore, only the incremental light-dark signal C can be separated. The signal C that is the incremental light-dark signal obtained by this separation is transmitted to the relative position detection circuit 23.

The signal C from a separated first modulation incremental pattern part 31' is input to the relative position detection circuit 23. The relative position detection circuit 23 outputs a relative position signal D1'. The relative position signal D1', a modulation pattern position signal D2'and an absolute position signal D3' thus obtained are input to the absolute position combining circuit 30. The absolute position combining circuit 30 operates similarly to that according to the fourth embodiment.

The photoelectric encoder according to the tenth embodiment stated above can exhibit similar advantages to those of the photoelectric encoder according to the fourth embodiment. Furthermore, the photoelectric encoder according to the tenth embodiment can not only reduce the track width but also detect the absolute position using fewer types of photodiode arrays than types of patterns. As a result, it is possible to improve measuring accuracy, downsize the photoelectric encoder, and reduce cost.

### [Eleventh Embodiment]

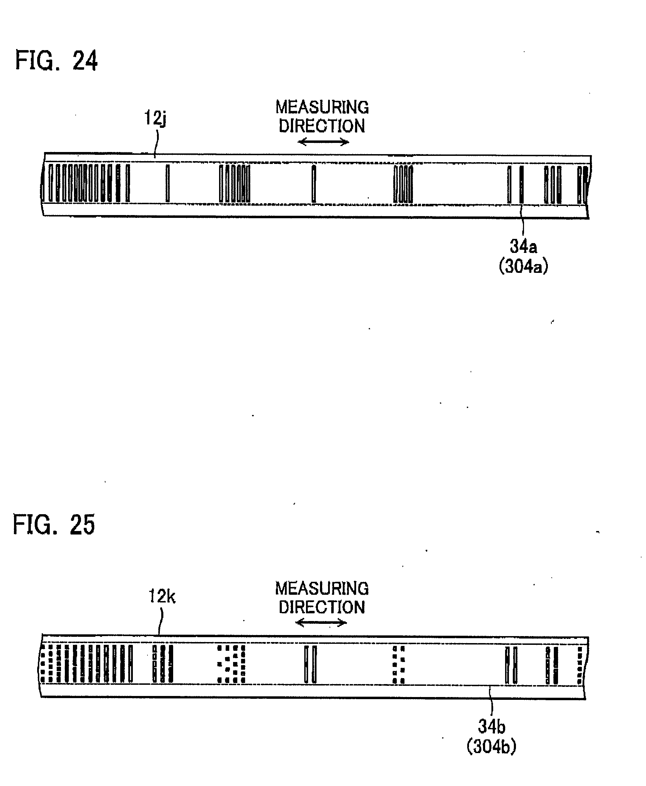

Referring to Fig. 24, a photoelectric encoder according to an eleventh embodiment of the present invention will be described. Fig. 24 is a plan view showing a configuration of a scale 12j of the photoelectric encoder according to the eleventh embodiment. The photoelectric encoder according to the eleventh embodiment differs from that according to the tenth embodiment only in the configuration of the scale 12j. Similar constituent elements of the photoelectric encoder according to the first to tenth embodiments are not described in the eleventh embodiment.

As shown in Fig. 24, the scale 12j includes an ABS/second modulation INC integrated track 304a that includes anABS/second modulation INC integrated pattern 34a formed by a similar method to the method according to the tenth embodiment (Fig. 22). The ABS/second modulation INC integrated pattern 34a is formed by integrating an absolute pattern 32 with a second modulation incremental pattern 31a and arranging the integrated pattern on one track.

The photoelectric encoder according to the eleventh embodiment stated above can exhibit similar advantages to those of the photoelectric encoder according to the tenth embodiment.

### [Twelfth Embodiment]

Referring to Fig. 25, a photoelectric encoder according to a twelfth embodiment-of the present invention will be described. Fig. 25 is a plan view showing a configuration of a scale 12k of the photoelectric encoder according to the twelfth embodiment. The photoelectric encoder according to the twelfth embodiment differs from that according to the tenth embodiment only in the configuration of the scale 12k. Similar constituent elements of the photoelectric encoder according to the first to eleventh embodiments are not described in the twelfth embodiment.

As shown in Fig. 25, the scale 12k includes an ABS/third modulation INC integrated track 304b that includes an ABS/third modulation INC integrated pattern 34b formed by a similar method to the method according to the tenth embodiment (Fig. 22). The ABS/third modulation INC integrated pattern 34b is formed by integrating an absolute pattern 32 with a third modulation incremental pattern 31b and arranging the integrated pattern on one track.

The photoelectric encoder according to the twelfth embodiment stated above can exhibit similar advantages to those of the photoelectric encoder according to the tenth embodiment.

### [Thirteenth Embodiment]

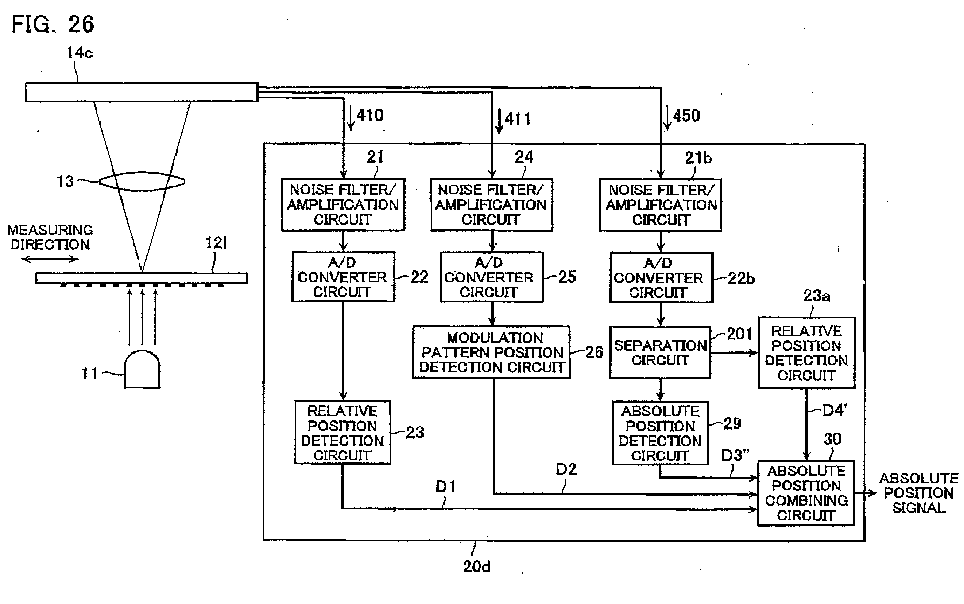

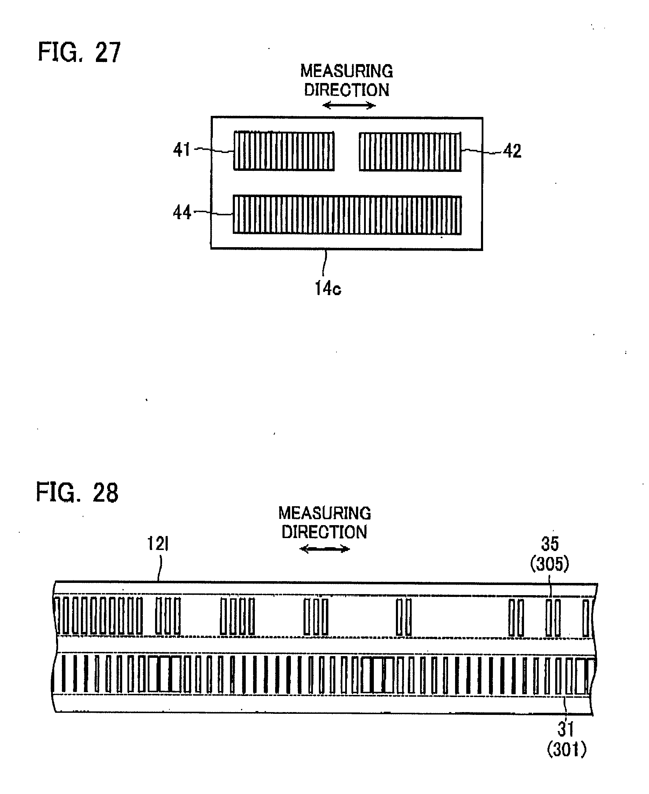

Referring to Figs. 26 to 28, a photoelectric encoder according to a thirteenth embodiment of the present invention will be described. Similar constituent elements of the photoelectric encoder according to the first to twelfth embodiments are denoted by the same reference symbols and not described in the thirteenth embodiment. Fig. 26 is a schematic diagram showing an overall configuration of the photoelectric encoder according to the thirteenth embodiment. Fig. 27 shows a plane configuration of a light receiving element 14c. Fig. 28 shows a plane configuration of a scale 121. As shown in Fig. 26, the photoelectric encoder according to the thirteenth embodiment differs from the first to twelfth embodiments in configurations of the scale 121, the light receiving element 14c and a signal processing circuit 20d.

As shown in Fig. 27, the light receiving element 14c includes INC arrays 41 and 44 and a modulation array 42 similarly to the seventh embodiment.

As shown in Fig. 28, the scale 121 includes a first modulation incremental track 301 similarly to the first embodiment. The scale 121 also includes an ABS/INC integrated track 305 constituted by an ABS/INC integrated pattern 35 obtained by integrating a modulation incremental pattern 31 with an absolute pattern 32 and arranging the integrated pattern on one track in place of the modulation incremental pattern 31 and the absolute pattern 32. The scale 121 according to the thirteenth embodiment differs from the scales 12 to 12k according to the first to twelfth embodiments in this respect. Similarly to the tenth embodiment (Fig. 22), the ABS/INC integrated pattern 35 is formed by integrating the absolute pattern 32 with the incremental pattern 33 and arranging the integrated pattern on one track.

As shown in Fig. 26, the signal processing circuit 20d according to the thirteenth embodiment includes noise filter/amplification circuits 21 and 24, A/D converter circuits 22 and 25, a relative position detection circuit 23, a modulation pattern position detection circuit 26, a separation circuit 201, an absolute position detection circuit 29 and an absolute position combining circuit 30 similarly to the tenth embodiment. The signal processing circuit 20d also includes a noise filter/amplification circuit 21b, an A/D converter circuit 22b and a relative position detection circuit 23a.

A relative position signal D1 and a modulation pattern position signal D2 are input to the absolute position combining circuit 30 by similar configurations and operations of the noise filter/amplification circuits 21 and 24, the A/D converter circuit 22 and 25, the separation circuit 201, the relative position detection circuit 23 and the modulation pattern position detection circuit 26 to those according to the seventh embodiment.

On the other hand, the noise filter/amplification circuit 21b receives an analog signal 450 from an INC array 44 of the light receiving element 14c based on the ABS/INC integrated pattern 35. Next, the A/D converter circuit 22b converts the analog signal 450 into a digital signal and inputs the digital signal to the separation circuit 201.

The absolute position detection circuit 29 receives a signal based on the ABS/INC integrated pattern 35 and separated by the separation circuit 201 and outputs an absolute position signal D3''. Further, the relative position detection circuit 23a receives a signal based on the ABS/INC integrated pattern 35 and separated by the separation circuit 201 and outputs a relative position signal D4'.

The photoelectric encoder according to the thirteenth embodiment stated above can exhibit similar advantages to those of the tenth embodiment.

### [Fourteenth Embodiment]

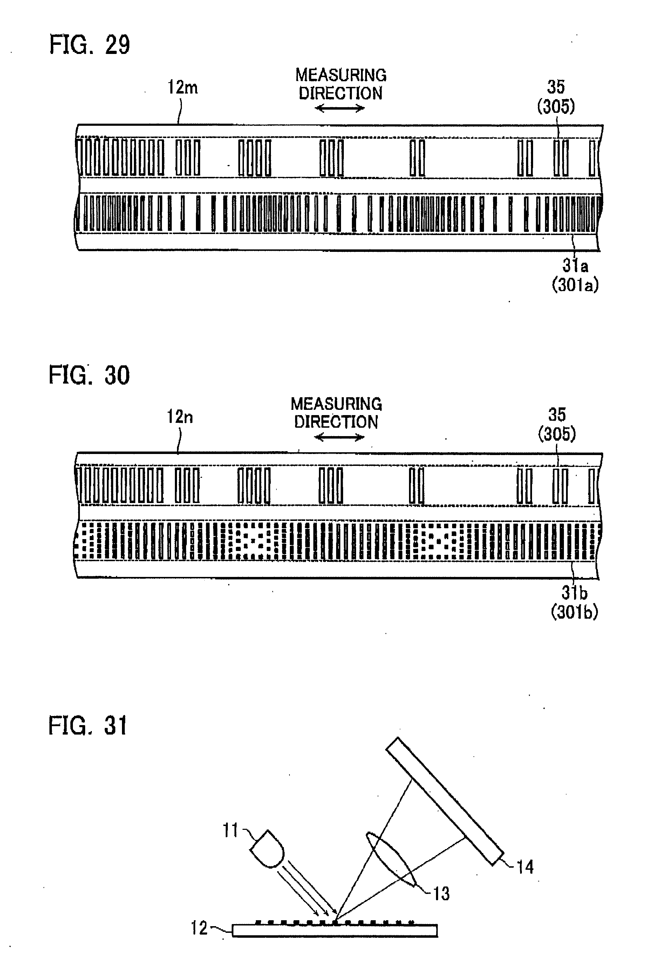

Referring to Fig. 29, a photoelectric encoder according to a fourteenth embodiment of the present invention will be described. Fig. 29 is a plan view showing a configuration of a scale 12m of the photoelectric encoder according to the fourteenth embodiment. The photoelectric encoder according to the fourteenth embodiment differs from that according to the thirteenth embodiment only in the configuration of the scale 12m. Similar constituent elements of the photoelectric encoder according to the first to thirteenth embodiments are not described in the fourteenth embodiment.

As shown in Fig. 29, the scale 12m includes an ABS/INC integrated pattern 35 similarly to the thirteenth embodiment. The scale 12m also includes a second modulation incremental track 301a similarly to the second embodiment.

The photoelectric encoder according to the fourteenth embodiment stated above can exhibit similar advantages to those of the photoelectric encoder according to the thirteenth embodiment.

### [Fifteenth Embodiment]

Referring to Fig. 30, a photoelectric encoder according to a fifteenth embodiment of the present invention will be described. Fig. 30 is a plan view showing a configuration of a scale 12n of the photoelectric encoder according to the fifteenth embodiment. The photoelectric encoder according to the fifteenth embodiment differs from that according to the thirteenth embodiment only in the configuration of the scale 12n. Similar constituent elements of the photoelectric encoder according to the fifteenth embodiment to those according to the first to fourteenth embodiments are not described in the fifteenth embodiment.

As shown in Fig. 30, the scale 12n includes an ABS/INC integrated pattern 35 similarly to the thirteenth embodiment. The scale 12n also includes a third modulation incremental track 301b similarly to the third embodiment.

The photoelectric encoder according to the fifteenth embodiment stated above can exhibit similar advantages to those of the photoelectric encoder according to the thirteenth embodiment.

### [Other Embodiments]

The embodiments of the present invention have been described so far. However, the present invention is not limited to those embodiments but various changes, modifications, additions and the like can be made of the present invention within a range without departure from the spirit of the present invention. For example, the present invention has been described so far while taking a transmission photoelectric encoder as an example. Alternatively, as shown in Fig. 31, the present invention may be applied to a reflection photoelectric encoder in which a light emitting element 11 is arranged on the same side as that on which a lens 13 and a light receiving element 14 are arranged as a reflection optical system for reflecting a light by the light emitting element 11.

## Claims

1. A photoelectric encoder comprising:
a scale (12);
a light source (11) irradiating a measurement light onto the scale (12);
a light receiving unit (14) receiving the measurement light reflected or transmitted by the scale (12); and
a signal processing circuit (20) processing a light receiving signal of the light receiving unit (14) and detecting an absolute position of the scale,
the scale (12) being configured to be relatively movable to the light source and the light receivingunit (14) inameasuring direction, and includes a modulation incremental track (301) that includes a modulation incremental pattern (31) having a plurality of modulation scale patterns (3A(k)) arranged thereon, and
the modulation incremental pattern (31) is formed so that a shape or a pitch of the modulation scale patterns (3A(k)) changes periodically in the measuring direction within a first period (Pr).

2. The photoelectric encoder according to claim 1,
wherein the modulation incremental pattern (31) is formed so that a center distance (L0) in the measuring direction between one of the modulation scale patterns (3A(k)) and another modulation scale pattern (3A(k+1)) adjacent to one of the modulation scale patterns (3A(k)) is equal among all the modulation scale patterns, and formed so that a width (W1, W2) of each of the modulation scale patterns (3A(k)) in the measuring direction changes periodically within the first period (Pr).

3. The photoelectric encoder according to claim 1,
wherein the modulation incremental pattern (31a) is formed so that a center distance (L1, L2) in the measuring direction between one of the modulation scale patterns (3B(k)) and another modulation'scale pattern (3B(k+1)) adjacent to one of the modulation scale patterns (3B(k)) changes periodically within the first period (Pr), and formed so that a width (W0) of each of the modulation scale patterns (3B(k)) in the measuring direction is equal.

4. The photoelectric encoder according to claim 1,
wherein the modulation incremental pattern (31b) is formed so that a center distance (L0) in the measuring direction between one of the modulation scale patterns (3C(k)) and another modulation scale pattern (3C(k+1)) adjacent to one of the modulation scale patterns (3C(k)) is equal among all the modulation scale patterns (3C(k)), and formed so that a width (W0) of each of the modulation scale patterns (3C(k)) in the measuring direction is equal, and
the modulation scale patterns (3C(k)) have fractured part in which the modulation scale pattern (3C(k)) is fractured, and an area of the fractured part changes periodically within the first period (Pr).

5. The photoelectric encoder according to claim 1,
wherein the scale (12d) further comprises an absolute track (302) including an absolute pattern (32) that expresses an absolute position.

6. The photoelectric encoder according to claim 5,
wherein the scale (12g) further comprises an incremental track (303) including an incremental pattern (33) having a plurality of scale patterns arranged thereon equidistantly at intervals of a second period.

7. The photoelectric encoder according to claim 5,
wherein the absolute pattern (32) and the modulation incremental pattern (31) are formed on same track (304), and
a pattern (34) is formed only in a portion in which both the absolute pattern (32) and the modulation incremental pattern (31) are present.

8. The photoelectric encoder according to claim 6,
wherein the absolute pattern (32) and the incremental pattern (33) are formed on same track (305), and
a pattern (35) is formed only in a portion in which both the absolute pattern (32) and the incremental pattern (33) are present.

9. A scale (12) used in a photoelectric encoder and reflecting or transmitting a measurement light, comprising:
a modulation incremental track (301) including a modulation incremental pattern (31) having a plurality of modulation scale patterns (3A(k)) arranged thereon,
the modulation incremental pattern (31) being formed so that a shape or a pitch of the modulation scale patterns (3A(k)) changes periodically in a measuring direction within a first period (Pr).

10. The scale (12) according to claim 9,
wherein the modulation incremental pattern (31) is formed so that a center distance (L0) in the measuring direction between one of the modulation scale patterns (3A(k)) and another modulation scale pattern (3A(k+1)) adjacent to one of the modulation scale patterns (3A(k)) is equal among all the modulation scale patterns, and formed so that a width (W1, W2) of each of the modulation scale patterns (3A(k)) in the measuring direction changes periodically within the first period (Pr).

11. The scale (12a) according to claim 9,
wherein the modulation incremental pattern (31a) is formed so that a center distance (L1, L2) in the measuring direction between one of the modulation scale patterns (3B(k)) and another modulation scale pattern (3B(k+1)) adjacent to one of the modulation scale patterns (3B(k)) changes periodically within the first period, and formed so that a width (W0) of each of the modulation scale patterns (3B(k)) in the measuring direction is equal.

12. The scale (12b) according to claim 9,
wherein the modulation incremental pattern (31b) is formed so that a center distance (L0) in the measuring direction between one of the modulation scale patterns (3C(k)) and another modulation scale pattern (3C(k+1)) adjacent to one of the modulation scale patterns (3C(k)) is equal among all the modulation scale patterns (3C(k)), and formed so that a width (W0) of each of the modulation scale patterns (3C(k)) in the measuring direction is equal, and
the modulation scale patterns (3C(k)) have fractured part in which the modulation scale pattern (3C(k)) is fractured, and an area of the fractured part changes periodically within the first period (Pr).

13. The scale (12d) according to claim 9, further comprising:
an absolute track (302) including an absolute pattern (32) that expresses an absolute position.

14. The scale (12g) according to claim 13, further comprising:
an incremental track (303) including an incremental pattern (33) having a plurality of scale patterns arranged thereon equidistantly at intervals of a second period.

15. The scale (12i) according to claim 13,
wherein the absolute pattern (32) and the modulation incremental pattern (31) are formed on same track (304), and
a pattern (34) is formed only in a portion in which both' the absolute pattern (32) and the modulation incremental pattern (31) are present.

16. The scale (121) according to claim 14,
wherein the absolute pattern (32) and the incremental pattern (33) are formed on same track (305), and
a pattern (35) is formed only in a portion in which both the absolute pattern (32) and the incremental pattern (33) are present.
